Europäisches Patentamt

European Patent Office

Office européen des brevets

(19)

(11) Veröffentlichungsnummer: **0 224 160 B1**

(12) **EUROPÄISCHE PATENTSCHRIFT**

(45) Veröffentlichungstag der Patentschrift: 07.08.91

(51) Int. Cl.⁵: **B01J** 47/04, C02F 1/28

(21) Anmeldenummer: 86115903.6

(22) Anmeldetag: 15.11.86

(54) Verfahren zur Entfernung von Kohlenwasserstoffen aus Abwässern oder Grundwasser.

(30) Priorität: 28.11.85 DE 3542065

(43) Veröffentlichungstag der Anmeldung:
03.06.87 Patentblatt 87/23

(45) Bekanntmachung des Hinweises auf die
Patenterteilung:
07.08.91 Patentblatt 91/32

(84) Benannte Vertragsstaaten:
AT BE CH DE ES FR GB GR IT LI LU NL SE

(56) Entgegenhaltungen:
EP-A- 0 129 622      DE-A- 1 517 459
DE-A- 3 418 074      FR-A- 1 480 424
FR-A- 2 273 569      GB-A- 662 646
US-A- 4 430 226

CHEMICAL ABSTRACTS, Band 74, Nr. 20, 17.
Mai 1971, Seite 186, Zusammenfassung Nr.
102814p, Columbus, Ohio, US; A. ABADIE et
al.: "Ion exchange resins: purification of waters, loaded with hydrocarbons", & TRIB. CE-
BEDEAU (CENT. BELGE ETUDE DOC. EAUX)
1970, 23(323), 445-52

(73) Patentinhaber: Ralf F. Piepho Abwassertechnik GmbH
Rittergut 2
W-3015 Wennigsen 5(DE)

(72) Erfinder: Piepho, Ralf F.
Rittergut 2
W-3015 Wenningsen 5(DE)

(74) Vertreter: Rücker, Wolfgang, Dipl.-Chem. Patentanwalt
Bergiusstrasse 2b
W-3000 Hannover 51(DE)

## Beschreibung

Die Erfindung betrifft ein Verfahren zur Entfernung von Kohlenwasserstoffen, insbesondere chlorierten Kohlenwasserstoffen, aus Abwässern oder aus dem Grundwasser.

Bei vielen industriellen Produktionsvorgängen fallen Abwässer an, die unumgänglich aufgrund ihrer Entstehungsgeschichte oder Herkunft Kohlenwasserstoffe dispergiert enthalten, insbesondere chlorierte Kohlenwasserstoffe beispielsweise organische Lösungsmittel, die schwer aus diesen Abwässern zu entfernen sind, insbesondere bis auf eine Restmenge, die tolerierbar ist.

Andererseits gelangen solche chlorierten Kohlenwasserstoffe auch in Abwässer aufgrund von Schadstellen in Rohrleitungsnetzen oder in das Grundwasser, aus dem sie an irgendeiner geeigneten Stelle wieder zu entfernen sind.

Aus der US-A-4 430 226 geht hervor, daß man Aktivkohle und Ionenaustauscher gleichzeitig verwenden kann, um ultrareines Wasser herzustellen.

Aus der DE-OS 34 18 074 ist ein Verfahren zur Entfernung von Kohlenwasserstoffen bekannt, insbesondere aus dem Grundwasser, wobei man dem zu reinigenden Wasser eine Menge Aktivkohle zusetzt und anschließend diese Aktivkohle/Wasser Mischung mit Bleicherde behandelt und schließlich die Feststoffe und sonstigen im Abwasser oder Wasser dispergierten Schadstoffe vermittels eines an sich bekannten Trennmittels, beispielsweise eines Mittel wie es in der deutschen Patentschrift 25 27 987 beschrieben ist, abtrennt.

Wenn diese Verwendung von Aktivkohle in Verbindung mit Bleicherde auch eine beträchtliche Verringerung der im Abwasser oder im Grundwasser dispergierten Chlorkohlenwasserstoffe gestattet, so ist es doch erstrebenswert und in vielen Fällen notwendig, den Gehalt an Kohlenwasserstoffen, insbesondere chlorierten Kohlenwasserstoffen, in den Abwässern weiter zu verringern.

Es ist daher Aufgabe der vorliegenden Erfindung, ein Verfahren vorzuschlagen, mit dem es möglich ist, die im Abwasser oder Grundwasser enthaltenen chlorierten Kohlenwasserstoffe in einfacher und wirkungsvoller Weise stärker als nach dem Stand der Technik bisher möglich, zu reduzieren.

Gelöst wird diese Aufgabe erfindungsgemäß dadurch, daß das Abwasser vor der Behandlung mit einem an sich bekannten Trennmittel mit einem Gemisch aus Aktivkohle und einem feinteiligen Ionenaustauscherharz mit einer Teilchengröße < 0,15 mm vermischt wird, welches nach einer Verweilzeit zusammen mit dem Trennmittel aus dem Abwasser entfernt wird, daß das Ionenaustauscherharz aus einem Gemisch aus basischen und sauren Harzen im Verhältnis 50:50 besteht, und daß die Gesamtmenge an Ionenaustauscherharzgemisch 10-30 Gew.-%, bezogen auf die Aktivkohle, ausmacht und 100-1000 g/m³ dem zu reinigenden Abwasser zugesetzt werden.

Bei dem Trennmittel handelt es sich um ein Mittel, wie es bekannterweise zur Behandlung von wäßrigen Emulsionen verwendet wird, beispielsweise von Abwässern, in denen Fette und Öle und dergleichen organische Stoffe enthalten sind, die mit dem Abwasser Emulsionen bilden. Diese Emulsionen können die zu entfernenden chlorieren Kohlenwasserstoffe in feindisperser Form enthalten.

Ein solches Trennmittel ist beispielsweise beschrieben in der DE-PS 25 27 987 und in der US-PS 44 15 467 und besteht aus einem Gemisch von wenigstens einem Elektrolyten, einem Flockungsmittel und einem Sorptionsmittel. Von diesem Sorptionsmittel wird dann auch bei der Abtrennung desselben vom Abwasser das Gemisch von Aktivkohle und feinteiligem Ionenaustauscherharz, an welchem die chlorierten Kohlenwasserstoffe sorbiert sind, gebunden.

Bei dem feinteiligen Ionenaustauscherharz handelt es sich vorzugsweise um ein Gemisch aus einem stark basischen, pulverförmigen Anionenaustauscherharz und einem stark sauren, pulverförmigen Kationenaustauscherharz in einem Verhältnis von 50 : 50, welches mit der Aktivkohle in Mengen zwischen 10 und 30%, bezogen auf die Aktivkohle, vermischt wird.

Bei dem basischen Anionenaustauscherharz besteht das Grundgerüst aus Polystyrol und die Ankergruppe aus einem quartären Amin. Bei dem sauren Kationenaustauscherharz ist das Grundgerüst ebenfalls Polystyrol und die Ankergruppe Sulfonsäure.

Solche Ionenaustauscherharze sind im Handel erhältlich, beispielsweise unter der Bezeichnung "Lewasorb" von der Firma Bayer AG.

In Verfolg des Erfindungsgedankens wird das Verfahren, insbesondere bei der Reinigung von Abwässern wie es beispielsweise beim Entfetten und Entölen von Motoren und Werkstücken auftrifft zunächst mechanisch gereinigt, sodann zur Entfernung von emulgierten Stoffen mit einem Trennmittel der oben beschriebenen Art behandelt und schließlich mit dem erfindungsgemäßen Sorptionsmittel nach Abtrennung des Trennmittels, worauf erneut eine entsprechende Menge eines solchen Trennmittels in einer weiteren Verfahrensstufe zugesetzt wird, um die aus Aktivkohle und Ionenaustauscherharz bestehende Mischung zu entfernen, die mit dem CKW beladen ist.

Der dabei letzlich anfallende Schlamm ist ohne weiteres deponierbar, während das gereinigte Abwasser in den Kreislauf zurückgegeben werden kann, um erneut zum Waschen von Maschinen oder Motoren verwendet zu werden.

Die Menge von Aktivkohle, die eingesetzt wird, hängt insbesondere ab von der Menge an chlorierten Kohlenwasserstoffen im Abwasser und zwar wird die Aktivkohle in einer Menge von zwischen 100 und 1000 g/m$^3$ eingesetzt. Die Menge des zuzuseztenden Trennmittels richtet sich nach der Menge zugesetzer Aktivkohle und Ionenaustauscherharz und liegt zwischen 0,3 und 1 kg/m$^3$.

Es ist in Versuchen festgestellt worden, daß das erfindungsgemäße Verfahren Abwässer von chlorierten Kohlenwasserstoffen in solchem Umfang befreit, daß sie im Bereich der Nachweisgrenze liegen.

## Patentansprüche

1. Verfahren zur Entfernung von Kohlenwasserstoffen, insbesondere chlorierten Kohlenwasserstoffen aus Abwässern oder Grundwasser unter Verwendung eines Trennmittels, Aktivkohle und basischen und sauren Ionenaustauscherharzen, **dadurch gekennzeichnet**, daß in das zu reinigende Wasser, vor der Behandlung mit dem Trennmittel, ein Gemisch aus Aktivkohle und den feinteiligen Ionenaustauscherharzen mit einer Teilchengröße < 0,15 mm eingesetzt wird, welches nach einer Verweilzeit zusammen mit dem Trennmittel aus dem Abwasser oder Grundwasser entfernt wird, daß das Ionenaustauscherharz aus einem Gemisch aus basischen und sauren Harzen im Verhältnis 50:50 besteht, und daß die Gesamtmenge an Ionenaustauscherharzgemisch 10-30 Gew.-% bezogen auf die Aktivkohle ausmacht und 100-1000 g/m$^3$ dem zu reinigenden Abwasser zugesetzt werden.

## Claims

1. Process for removing hydrocarbons, particularly chlorinated hydrocarbons from waste or ground water using a seperating agent, activated carbon and basic and acid ion exchange resins, characterized in that, prior to the treatement with the seperating agent, into the water to be purified is introduced a mixture of activated carbon and finely divided ion exchange resins with a particle size of ≤ 0.15mm which, after a residence time, is removed together with the seperating agent from the waste or ground water, that the ion exchange resin comprises a mixture of basic and acid resins in a ratio of 50:50 and that the total ion exchange resin mixture quantity is 10 to 30% by weight based on the activated carbon and 100 to 1000 g/m$^3$ are added to the waste water to be purified.

## Revendications

1. Procédé pour éliminer les hydrocarbures et, en particulier, les hydrocarbures chlorés des eaux résiduaires ou des eaux souterraines en utilisant un agent de séparation, du charbon actif et des résines échangeuses d'ions basiques et acides, caractérisé en ce qu'on ajoute à l'eau à purifier et avant le traitement par l'agent de séparation, un mélange de charbon actif et de résines échangeuses d'ions à grains fins ayant une granulométrie inférieure à 0,15 mm, ce mélange étant éliminé des eaux résiduaires ou des eaux souterraines après un certain temps de contact avec l'agent de séparation, que la résine échangeuse d'ions est constituée d'un mélange de résines basique et acide dans le rapport 50:50 et que la quantité totale du mélange de résines échangeuses d'ions est égale à 10 à 30% en poids rapportée au charbon actif et est ajoutée aux eaux résiduaires à purifier à raison de 100 à 1000 g/m$^3$.